# EUROPÄISCHE PATENTSCHRIFT

(11) **EP 0 653 340 B1**
(45) Veröffentlichungstag und Bekanntmachung des Hinweises auf die Patenterteilung: **12.03.1997**
(21) Anmeldenummer: 94117304.9
(22) Anmeldetag: 03.11.1994
(51) Int. Cl.: B60T 8/00

(54) **Verfahren zur Regelung des Bremsvorgangs von Kraftfahrzeugen**
Procedure for controlling braking in vehicles
Procédé pour régler le déroulement du freinage de véhicules

(30) Priorität: 11.11.1993 DE 4338542
(43) Veröffentlichungstag der Anmeldung: 17.05.1995
(73) Patentinhaber: TEMIC TELEFUNKEN microelectronic GmbH, 74072 Heilbronn (DE); MERCEDES-BENZ AG, 70327 Stuttgart (DE)
(72) Erfinder: Scheer, Wolfgang, D-71720 Oberstenfeld (DE); Helldörfer, Reinhard, D-91083 Igelsdorf (DE); Leuteritz, Jürgen, D-90425 Nürnberg (DE); Gramann, Matthias, D-91233 Neunkirchen a.Sand (DE)
(74) Vertreter: Maute, Hans-Jürgen, Dipl.-Ing.

(56) Entgegenhaltungen:
- EP-A- 0 173 954
- EP-A- 0 445 575
- WO-A-85/02590
- WO-A-93/07037
- DE-A- 3 840 564

## Beschreibung

Die Erfindung betrifft ein Verfahren zur Regelung des Bremsvorgangs von Kraftfahrzeugen gemäß dem Oberbegriff des Patentanspruchs 1, wie es aus der EP 0 445 575 A2 bekannt ist.

Die dynamische Achslast auf die Achsen eines Kraftfahrzeugs ist für die Beurteilung des Bremsvorgangs - insbesondere bei unterschiedlichen Beladungszuständen des Kraftfahrzeugs - eine wichtige Größe: von ihr hängt die optimale Bremskraftverteilung zwischen den verschiedenen Achsen ab und damit auch die maximal erreichbare Bremskraft. Bei manchen Kraftfahrzeugen - insbesondere bei solchen mit kurzem Radstand und hohem Masseschwerpunkt (beispielsweise Zugmaschinen von Sattelschlepperzügen oder PKWs mit Dachlast) - treten beim Bremsvorgang größere Änderungen der dynamischen Achslast auf. Dies hat zur Folge, daß sich der Schlupf der Räder während des Bremsvorgangs verändert, wodurch einerseits die Bremskrafteinstellung bzw. die Bremskraftverteilung und demzufolge auch der Bremsvorgang selbst nicht optimal ist (längerer Bremsweg), und andererseits die Gefahr des Blockierens einzelner Räder besteht, was die Sicherheit bzw. Fahrstabilität des Kraftfahrzeugs - insbesondere bei Lastzügen mit Zugfahrzeug und Anhänger/Auflieger - massiv beeinträchtigt.
Beim gattungsbildenden verfahren der EP 0 445 575 A2 wird die Bremsdruckverteilung auf die Achsen von Kraftfahrzeugen mit ABS-Druckmittelbremse vorgenommen, die keinen Anhänger oder Auflieger aufweisen.

Der Erfindung liegt die Aufgabe zugrunde, ein einfaches verfahren zur Regelung des Bremsvorgangs von Kraftfahrzeugen mit Anhängern/Aufliegern anzugeben, insbesondere unter Berücksichtigung dynamischer Achslaständerungen.
Diese Aufgabe wird erfindungsgemäß durch die Merkmale im Kennzeichen des Patentanspruchs 1 gelöst.

Vorteilhafte Weiterbildungen des Verfahrens ergeben sich aus den Unteransprüchen.

Zur Regelung des Bremsvorgangs von Lastzügen aus Zugfahrzeug und Anhänger/Auflieger sind folgende Größen von Interesse:
- die Raddrehzahl r_{V} mindestens eines Rades der Vorderachse des Zugfahrzeugs; die Raddrehzahlen werden über einen (meist bereits vorhandenen) Raddrehzahl-Sensor bestimmt,
- optional die Raddrehzahl n_{H} mindestens eines Rades der Hinterachse des Zugfahrzeugs als Referenzwert (Messung über Raddrehzahl-Sensor); hieraus kann die Schlupfdifferenz SD zwischen Vorderachse und Hinterachse des Zugfahrzeugs bestimmt werden,
- der Zeitpunkt t₀ des Bremsbeginns; dieser wird entweder durch einen Bremsdrucksensor oder über einen Wegsensor am Bremspedal festgelegt,
- der Zeitablauf des Bremsvorgangs; hieraus kann die Zeitabhängigkeit der Raddrehzahlen n_{V}(t_{B}) bzw. n_{H}(t_{B}) während des Bremsvorgangs ermittelt werden,
- der Bremsdruck p an jeder Achse des Fahrzeugs, um den Bremsvorgang durch Vorgabe des Bremsdrucks steuern zu können.

Der ermittelte zeitliche Verlauf der Raddrehzahlen an der Vorderachse des Zugfahrzeugs (oder - bei Kenntnis der Raddrehzahl der Hinterachse - der ermittelte zeitliche Verlauf der Schlupfdifferenz) wird ausgewertet, und abhängig hiervon die Bremskraftverteilung zwischen Zugfahrzeug und Anhänger/Auflieger sowie die zeitliche Bremskraftentfaltung von Zugfahrzeug und Anhänger/Auflieger vorgegeben. In Abhängigkeit der Auswertung der Raddrehzahlen können die Lastzüge in verschiedene Klassen hinsichtlich des Verhaltens bzgl. dynamischer Achslaständerungen eingruppiert werden und abhängig von dieser Klassifizierung unterschiedliche Strategien zur Beeinflussung des Bremsvorgangs gewählt werden. Insbesondere wird auf ein Auftreten signifikanter dynamischer Achslaständerungen dann geschlossen, wenn sich die Raddrehzahlen (oder die Schlupfdifferenz) kurzzeitig (signifikant) ändern. Dieser Auswertung wird ein Zeitkriterium und ein Größenkriterium zugrundegelegt:
- Zeitkriterium: die Änderung der Raddrehzahlen bzw. der Schlupfdifferenz muß innerhalb eines bestimmten Zeitfensters während des Bremsvorgangs auftreten (insbesondere am Anfang des Bremsvorgangs, beispielsweise innerhalb 0,3 s nach Bremsbeginn); dieses Zeitfenster wird unabhängig von der Fahrzeuggeschwindigkeit oder von der Art des Bremsvorgangs vorgegeben.
- Größenkriterium: die Änderung der Raddrehzahlen bzw. der Schlupfdifferenz muß einen bestimmten drehzahlabhängigen bzw. schlupfabhängigen Schwellwert überschreiten; dieser Schwellwert wird signifikant größer als die beim Bremsvorgang üblicherweise auftretenden Änderungswerte für den Schlupfwert (typischerweise 2 % Änderung) vorgegeben - der Rollschlupfwert vor dem Bremsvorgang dient hierbei als Ausgangsgröße. Durch die Vorgabe und Auswertung mehrerer unterschiedlicher Schwellwerte können genauere und detailliertere Aussagen gewonnen werden.

Das vorgestellte Verfahren vereinigt mehrere Vorteile in sich:
- Es werden keine zusätzlichen Sensoren benötigt, so daß eine kostengünstige Realisierung möglich ist.
- Es ist sehr einfach und kann auf beliebigen Kraftfahrzeugen mit elektrisch ansteuerbaren oder regelbaren Bremssystemen implementiert werden.
- Es liefert eine Entscheidung über die zu wählende Bremsstrategie: treten keine (signifikanten) dynamischen Achslaständerungen beim Bremsvorgang auf, ist von dieser Seite aus keine Änderung des Bremsverhaltens erforderlich; treten dagegen signifikante dynamische Achslaständerungen auf, kann der Bremsvorgang mittels einer Steuerung der Bremskraftverteilung (Vorderachse/Hinterachse bei einem Anhänger- oder Aufliegerfahrzeug) und des Zeitpunkts des Bremsbeginns an der jeweiligen Achse (Vorderachse/Hinterachse) beeinflußt werden.
- Bei Kenntnis des Verhaltens des Lastzugs bzgl. dynamischer Achslaständerungen kann der Bremsvorgang verbessert werden: die maximal einsetzbare Bremskraft kann vergrößert werden, es ist ein kürzerer Bremsweg erreichbar, es besteht keine Gefahr des Blockierens einzelner Räder - der Bremsvorgang wird somit insgesamt sicherer.

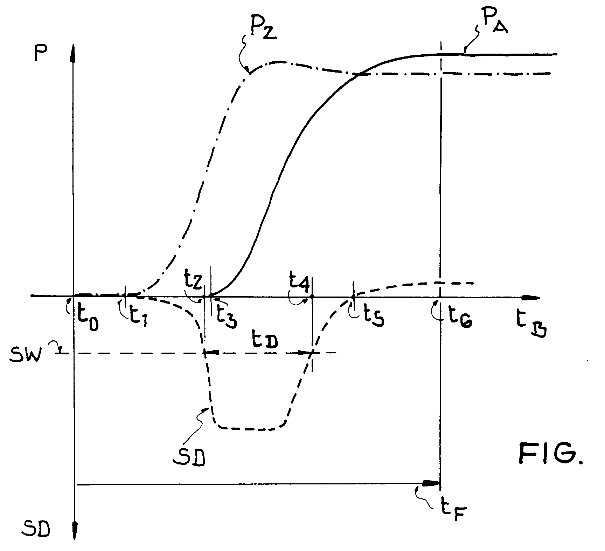

Das Verfahren wird im folgenden näher erläutert, wobei als Kraftfahrzeug beispielsweise ein Sattelschlepper mit Zugmaschine und Auflieger angenommen wird. In der Figur ist hierzu der zeitliche Verlauf des Bremsdrucks p (Zugfahrzeug p_{Z}, Auflieger p_{A}) und der zeitliche Verlauf der Schlupfdifferenz SD (zwischen Vorderachse und Hinterachse des Zugfahrzeugs) dargestellt.
Anhand der zeitlichen Bremsdruckkurven p ist zu erkennen, daß beim Bremsvorgang Probleme auftreten: Bei der Abbremsung des Sattelschleppers (Bremsbeginn zum Zeitpunkt t₀) wird zunächst das Zugfahrzeug (Zugmaschine) abgebremst (Zeitpunkt t₁, Bremsdruck p_{Z}), die Achslast auf die Vorderachse des Zugfahrzeugs durch das eingeleitete Moment des Aufliegers vergrößert und die Achslast auf die Hinterachse verkleinert; aufgrund des kurzen Radstands des Zugfahrzeugs wird die Vorderachse des Zugfahrzeugs dadurch sehr stark belastet. Sobald der Auflieger abgebremst wird (Zeitpunkt t₃, Bremsdruck p_{A}), wird die Vorderachse zwar entlastet, der Sattelschlepper kann aber instabil werden. Zur Verbesserung des Bremsverhaltens sollten demnach Bremsbeginn des Aufliegers und Stärke der Abbremsung so gewählt werden, daß das Zugfahrzeug bzw. dessen Vorderachse entlastet wird.
Hierzu wird die dynamische Achslaständerung durch Auswertung des zeitlichen Verlaufs der Schlupfdifferenz SD ermittelt (die horizontale Koppelkraft zwischen Zugfahrzeug und Auflieger erzeugt ein Moment um die Querachse des Zugfahrzeugs, woraus eine kurze dynamische Achslaständerung an den Zugfahrzeugachsen resultiert; hierdurch ändert sich auch der Kraftschlußbeiwert und gemäß der Kraftschlußbeanspruchungs-Schlupf-Kurve auch der Schlupf bzw. die Schlupfdifferenz SD). Beim Sattelzug ist mindestens ein Rad an den Achsen der Zugmaschine zur Bestimmung der Raddrehzahlen n_{V} (Vorderachse) und n_{H} (Hinterachse) mit Raddrehzahl-Sensoren bestückt, die Bremsdrücke p_{Z} an den Rädern der Zugmaschine und der Bremsdruck p_{A} für den Auflieger sind elektrisch ansteuerbar. Der Zeitpunkt t₀ des Bremsbeginns wird beispielsweise durch eine in einem der Bremszylinder angebrachte Druckdose ermittelt; zwischen den Zeitpunkten t₀ = 0 s und t₆ = 0,6 s wird ein Zeitfenster t_{F} vorgegeben, während dem eine Auswertung vorgenommen wird (Zeitkriterium). Zur Auswertung wird ein Schwellwert SW für die Schlupfdifferenz SD zwischen Vorderachse und Hinterachse des Zugfahrzeugs vorgegeben (die Schlupfdifferenz SD ist abhängig von der Raddrehzahldifferenz n_{V} - n_{H}); dieser Schwellwert SW ist signifikant größer (beispielsweise 3 bis 4 % Änderung der Schlupfdifferenz SD bezogen auf den Rollschlupfwert vor dem Bremsvorgang) als die normalerweise während des Bremsvorgangs auftretende Schlupfdifferenz SD (beispielsweise 2 % Änderung).
Durch die Auswertung des zeitlichen Verlaufs der Schlupfdifferenz SD kann zunächst ermittelt werden, ob beim Bremsvorgang des Sattelschleppers eine signifikante Änderung der dynamischen Achslast auftritt (Erreichen bzw. Überschreiten des Schwellwerts SW). Ist dies der Fall, kann die Zeitdifferenz zwischen dem Beginn der Bremskraftentfaltung am Zugfahrzeug und am Auflieger bestimmt werden und abhängig davon durch gezielte Veränderung der zeitlichen Bremskraftentfaltung eine verbesserte Abbremsung des Sattelzugs erreicht werden: bei Ermittlung des Zeitpunkts t₂ (Erreichen des Schwellwerts SW) und der Zeitdauer t_{D} während der der Schwellwert SW überschritten wird (Zeitintervall zwischen t₂ und t₄), kann der Bremsdruck an Zugfahrzeug und Auflieger (Zeitpunkt der Bremsbeginne t₁, t₃ und Größe der Bremsdrücke p_{Z}, P_{A} bzw. der Bremskraftverteilung) entsprechend variiert und dadurch der Bremsvorgang im Hinblick auf Sicherheit und Bremsweg optimiert werden.

## Patentansprüche

1. Verfahren zur Regelung des Bremsvorgangs von Kraftfahrzeugen, wobei
a) an mindestens einem Rad der Vorderachse des Kraftfahrzeugs die Raddrehzahl (n_{V}) sensiert wird,
b) an jeder Achse des Kraftfahrzeugs der Bremsdruck (p) in den Bremszylindern elektrisch angesteuert oder geregelt wird,
c) der Zeitpunkt (t₀) des Bremsbeginns und der zeitliche Ablauf (t_{B}) des Bremsvorgangs bestimmt und hieraus der zeitliche Verlauf der Raddrehzahlen (n(t)) ermittelt wird,
d) der zeitliche Verlauf der Raddrehzahlen (n(t)) durch Vergleich mit mindestens einem vorgegebenen raddrehzahlabhängigen Schwellwert (SW) ausgewertet wird,
dadurch gekennzeichnet:
e) zwischen zwei während des Bremsvorgangs gewählten Zeitpunkten (t₀, t₆) wird ein Zeitfenster (t_{F}) definiert,
f) die Bremsvorgänge von Lastzügen aus Zugfahrzeug und Anhänger/Auflieger werden geregelt, indem der zeitliche Verlauf der Raddrehzahlen (n(t)) des Zugfahrzeugs während des Zeitfensters (t_{F}) ausgewertet wird,
g) abhängig von der Auswertung der Raddrehzahlen (n(t)) des Zugfahrzeugs wird die Bremskraftverteilung zwischen Zugfahrzeug und Anhänger/Auflieger sowie die zeitliche Bremskraftentfaltung von Zugfahrzeug und Anhänger/Auflieger vorgegeben.

2. Verfahren nach Anspruch 1, dadurch gekennzeichnet, daß abhängig von der Auswertung der Raddrehzahlen (n(t)) des Zugfahrzeugs die Lastzüge verschiedenen Klassen mit unterschiedlichem Verhalten hinsichtlich dynamischer Achslaständerung zugeordnet werden.

3. Verfahren nach Anspruch 1 oder 2, dadurch gekennzeichnet, daß an mindestens einem Rad der Hinterachse des Kraftfahrzeugs die Raddrehzahl (n_{H}) sensiert wird, daß aus der Raddrehzahl (n_{V}) der Vorderachse und der Raddrehzahl (n_{H}) der Hinterachse die Schlupfdifferenz (SD) ermittelt wird, und daß der zeitliche Verlauf der Schlupfdifferenz (SD(t)) erfaßt und durch Vergleich mit mindestens einem schlupfabhängigen Schwellwert (SW) ausgewertet wird.

4. Verfahren nach einem der Ansprüche 2 oder 3, dadurch gekennzeichnet, daß dynamische Achslaständerungen dann als signifikant bewertet werden, wenn die Schwellwerte (SW) während des Zeitfensters (t_{F}) überschritten werden.

5. Verfahren nach einem der Ansprüche 1 bis 4, dadurch gekennzeichnet, daß beim Auftreten signifikanter dynamischer Achslaständerungen der Zeitpunkt (t₂) des Erreichens der Schwellwerte (SW) und die Zeitdauer (t_{D}) des Überschreitens der Schwellwerte (SW) bestimmt wird, und daß abhängig von der Auswertung der beiden das Überschreiten der Schwellwerte (SW) bestimmenden Zeitpunkte (t₂, t₄) eine Steuerung des Bremsvorgangs erfolgt.

6. Verfahren nach einem der Ansprüche 1 bis 5, dadurch gekennzeichnet, daß das Zeitfenster (t_{F}) am Anfang des Bremsvorgangs zwischen dem Bremsbeginn (t₀) und dem Zeitpunkt 0,6 s (t₆) definiert wird.

7. Verfahren nach einem der Ansprüche 1 bis 6, dadurch gekennzeichnet, daß einer der Schwellwerte (SW) als Abweichung der Raddrehzahl (n) bzw. der Schlupfdifferenz (SD) in Höhe von 3 - 4 % des vor Beginn des Bremsvorgangs ermittelten Rollschlupfwerts vorgegeben wird.

8. Verfahren nach einem der Ansprüche 1 bis 7 zur Steuerung des Bremsvorgangs von Kraftfahrzeugen mit großen dynamischen Achslaständerungen, insbesondere des Bremsvorgangs von Kraftfahrzeugen mit hohem Masseschwerpunkt und kurzem Radstand.

## Claims

1. Method of regulating the braking process of motor vehicles, whereby
a) at least one wheel of the front axle of the vehicle the wheel speed (n_{V}) is sensed,
b) at each axle of the vehicle the brake pressure (p) in the brake cylinders is electrically controlled or regulated,
c) the instant (t₀) of the commencement of braking and the timing (t_{B}) of the braking process are determined and used to determine the time characteristic of the wheel speeds (n(t)),
d) the time characteristic of the wheel speeds (n(t)) is evaluated by comparison with at least one preselected wheel speed-dependent threshold value (SW),
characterized in that:
e) a time window (t_{F}) is defined between two instants (t₀, t₆) selected during the braking process,
f) the braking processes of lorry-trailer combinations comprising a towing vehicle and a trailer/semi-trailer are regulated by evaluating the time characteristic of the wheel speeds (n(t)) of the towing vehicle during the time window (t_{F}),
g) in dependence upon the evaluation of the wheel speeds (n(t)) of the towing vehicle, the braking force distribution between towing vehicle and trailer/semi-trailer as well as the braking force deployment over time of towing vehicle and trailer/semi-trailer are preselected.

2. Method according to claim 1, characterized in that, in dependence upon the evaluation of the wheel speeds (n(t)) of the towing vehicle, the lorry-trailer combinations are assigned to various classes presenting different behaviour in response to a variation in dynamic axle load.

3. Method according to claim 1 or 2, characterized in that at least one wheel of the rear axle of the vehicle the wheel speed (n_{H}) is sensed, that the slip difference (SD) is determined from the wheel speed (n_{V}) of the front axle and the wheel speed (n_{H}) of the rear axle, and that the time characteristic of the slip difference (SD(t)) is acquired and evaluated by comparison with at least one slip-dependent threshold value (SW).

4. Method according to one of claims 2 or 3, characterized in that variations in dynamic axle load are evaluated as significant when the threshold values (SW) are exceeded during the time window (t_{F}).

5. Method according to one of claims 1 to 4, characterized in that, in the event of significant variations in dynamic axle load, the instant (t₂) of attainment of the threshold values (SW) and the period (t_{D}) of exceeding of the threshold values (SW) are determined and that, in dependence upon the evaluation of the two instants (t₂, t₄) determining the exceeding of the threshold values (SW), a control of the braking process is effected.

6. Method according to one of claims 1 to 5, characterized in that the time window (t_{F}) is defined at the start of the braking process between the start of braking (t₀) and the instant 0.6 s (t₆).

7. Method according to one of claims 1 to 6, characterized in that one of the threshold values (SW) is preselected as a variation of the wheel speed (n) or of the slip difference (SD) amounting to 3 to 4% of the rolling slip value determined prior to the start of the braking process.

8. Method according to one of claims 1 to 7 for controlling the braking process of motor vehicles presenting large variations in dynamic axle load, in particular the braking process of motor vehicles with a high centre of gravity and a short wheel base.

## Revendications

1. Procédé de régulation du processus de freinage de véhicules à moteur, dans lequel
a) le système détecte, sur au moins une roue de l'essieu avant du véhicule à moteur, la vitesse de rotation des roues (n_{V}),
b) sur chaque essieu du véhicule à moteur, le système commande électriquement ou régule la pression de freinage (p) dans les cylindres de frein,
c) le système détermine l'instant (t₀) du début de freinage et l'allure, en fonction du temps, (t_{B}) du processus de freinage et, à partir de cela, détermine l'allure, en fonction du temps, des vitesses de rotation des roues (n(t)),
d) le système traite l'allure, en fonction du temps, des vitesses de rotation des roues (n(t)) par comparaison avec au moins une valeur de seuil prescrite (SW) fonction de la vitesse de rotation des roues,
caractérisé par le fait:
e) que le système définit une fenêtre temporelle (t_{F}) entre deux instants (t₀, t₆) choisis pendant le processus de freinage,
f) que le système régule les processus de freinage de trains routiers constitués d'un véhicule tracteur et de remorques/les semi-remorques en traitant l'allure, en fonction du temps, des vitesses de rotation des roues (n(t)) du véhicule tracteur pendant la fenêtre temporelle (t_{F}),
g) qu'en fonction du traitement des vitesses de rotation des roues (n(t)) du véhicule tracteur, le système prescrit la répartition de la force de freinage entre le véhicule tracteur et les remorques/les semi-remorques ainsi que le développement , en fonction du temps, des forces de freinage exercées par le véhicule tracteur et par les remorques/les semi-remorques.

2. Procédé selon la revendication 1, caractérisé par le fait qu'en fonction du traitement des vitesses de rotation des roues (n(t)) du véhicule tracteur, le système fait correspondre aux trains routiers différentes classes à comportement différent en ce qui concerne la modification dynamique de la charge sur essieu.

3. Procédé selon la revendication 1 ou 2, caractérisé par le fait que la vitesse de rotation des roues (n_{H}) est détectée sur au moins une roue de l'essieu arrière du véhicule à moteur, qu'à partir de la vitesse de rotation des roues (n_{V}) de l'essieu avant et de la vitesse de rotation des roues (n_{H}) de l'essieu arrière, le système détermine la différence de glissement (SD) et qu'il saisit l'allure, en fonction du temps, de la différence de glissement et la traite par comparaison avec au moins une valeur de seuil (SW) fonction du glissement.

4. Procédé selon la revendication 2 ou 3, caractérisé par le fait que le système considère des modifications dynamiques de la charge sur essieu comme significatives lorsque les valeurs de seuil (SW) sont dépassées pendant la fenêtre temporelle (t_{F}).

5. Procédé selon la revendication 1 ou 4, caractérisé par le fait que, lors de l'apparition de modifications dynamiques significatives de la charge sur essieu, le système détermine l'instant (t₂) où sont atteintes les valeurs de seuil (SW) ainsi que la durée (t_{D}) du dépassement de la valeur de seuil (SW) et qu'en fonction du traitement des deux instants (t₂, t₄) déterminant le dépassement de la valeur de seuil (W), il se fait une commande du processus de freinage.

6. Procédé selon l'une des revendications 1 à 5, caractérisé par le fait que le système définit la fenêtre temporelle (t_{F}) au début du processus de freinage entre le début du freinage (0) et l'instant 0,6 s (t₆).

7. Procédé selon l'une des revendications 1 à 6, caractérisé par le fait que l'une des valeurs de seuil (SW) est prescrite sous forme d'écart de la vitesse de rotation des roues (n) ou de la différence de glissement (SD) pour un montant de 3-4 % de la valeur du glissement de roulement déterminé avant le début du processus de freinage.

8. Procédé selon la revendication 1 à 7, pour commander le processus de freinage de véhicules à moteur présentant d'importantes modifications dynamiques de la charge sur essieu, en particulier du processus de freinage de véhicules à moteur à centre de gravité élevé et faible empattement.
